# EUROPÄISCHE PATENTSCHRIFT

(11) **EP 0 940 320 B1**
(45) Veröffentlichungstag und Bekanntmachung des Hinweises auf die Patenterteilung: **02.05.2003**
(21) Anmeldenummer: 99101606.4
(22) Anmeldetag: 03.02.1999
(51) Int. Cl.: B62D 25/08, B62D 21/11, B62D 21/12, B60G 9/00

(54) **Fahrgestell eines schweren Nutzfahrzeuges**
Chassis for a heavy-duty utility vehicle
Chassis pour véhicule utilitaire lourd

(30) Priorität: 04.03.1998 DE 19809281
(43) Veröffentlichungstag der Anmeldung: 08.09.1999
(73) Patentinhaber: MAN Nutzfahrzeuge Aktiengesellschaft, 80976 München (DE)
(72) Erfinder: Rühmann, Gerd, Dipl.-Ing. (FH), 82229 Seefeld (DE); Sigl, Johann, Dipl.-Ing. (FH), 82266 Becher (DE); Breitling, Ulrich, Dr.-Ing., 81245 München (DE); Nickels, Thomas, 81541 München (DE); Hintereder, Jürgen, Dipl.-Ing. (FH), 85586 Poing (DE); Neukam, Michael, Dipl.-Ing. (TU), 82110 Germering (DE); Lutsch, Helmar, Dipl.-Ing., 81927 München (DE)

(56) Entgegenhaltungen:
- EP-A- 0 636 531
- EP-A- 0 678 405
- DE-A- 4 226 500
- DE-A- 19 624 242
- US-A- 4 168 086
- US-A- 5 641 181

## Beschreibung

Die Erfindung betrifft ein Fahrgestell eines schweren Nutzfahrzeugs mit Merkmalen gemäß dem Oberbegriff des Anspruchs 1.

Die Erfindung geht aus von der DE 196 24 242 A1. Aus dieser ist ein Nutzfahrzeug bekannt, das ein Fahrgestell mit einer Starrachse aufweist. Zu deren Querführung ist ein Panhardstab vorgesehen. Über diesen und den Starrachskörper erstreckt sich ein von vorne gesehen U-förmiger Querträger, der die beiden Rahmenlängsträger miteinander verbindet. Der Starrachskörper ist des weiteren in herkömmlicher Weise über je Achsseite einen Luftfederbalg und einen benachbart hierzu angeordneten Stoßdämpfer gegenüber dem Rahmen abgefedert.

Des weiteren ist aus der EP 0636531 A2 die Hinterachsaufhängung eines Personenkraftwagen bekannt. Dabei ist eine nach Art einer Verbundlenkerachse ausgebildete Starrachse vorgesehen, bei der die Längslenker durch hochkantgestellte Platten gebildet sind, die am Starrachskörper angeschweißt sind. Außerdem ist diese Starrachse über je Achsseite ein Dämpferbein gegenüber einem Bodenblech abgestützt. Über die Art der Federung ist nichts ausgesagt. Zur Querführung der Starrachse ist ein Panhardstab vorgesehen.

Ferner offenbart die DE 21 42 079 eine luft- oder schraubengefederte Verbundlenker-Vorderachse mit einem Starrachskörper und zwei fest mit diesem verbundenen Längslenkern. Zur Querführung ist ein Panhardstab vorgesehen, der einenendes an einem Längslenker und andernendes an der gefederten Masse des Fahrzeugs angelenkt ist.

Demgegenüber besteht die Aufgabe der Erfindung darin, bei einem Fahrgestell eines schweren Nutzfahrzeuges der gattungsgemäßen Art die Starrachse einschließlich deren Aufhängung und Anlenkung sowie Federungs- und Dämpfungsorgane auf möglichst platzsparende Weise und so darzustellen, dass sich ein in Verbindung mit Starrachsen bisher bei schweren Nutzfahrzeugen nicht erreichter Fahr- und Federungskomfort erzielen lässt.

Diese Aufgabe ist bei einem Fahrgestell der gattungsgemäßen Art erfindungsgemäß durch die im Anspruch 1 angegebenen Merkmale gelöst.

Vorteilhafte Ausgestaltungen und Weiterbildungen sowie Anwendungen der Erfindung sind in den Unteransprüchen angegeben.

Aufgrund der erfindungsgemäßen Ausgestaltung der Starrachse und der erfindungsgemäßen Art von deren Aufhängung, Anlenkung, Federung und Dämpfung sowie des speziellen Querträgers ergibt sich im Bereich der Starrachse ein entsprechend stabilisierter Rahmenabschnitt sowie ein großer Freiraum zwischen den Rahmen-Längsträgern über der Querträger-Quertraverse, was dort den ungehinderten Einbau anderer Fahrzeugteile wie eines Antriebsaggregates in einem Lastkraftwagen oder das Vorsehen eines breiten Mittelganges in einem Omnibus ermöglicht. Die erfindungsgemäße Ausbildung der Starrachse nach Art einer selbststabilisierenden Verbundlenkerachse mit den angegebenen Merkmalen stellt ebenso wie das Vorsehen von Feder-Dämpfer-Beinen in einem schweren Nutzfahrzeug ein Novum dar, weil solche Baugruppen bisher nur in Personenkraftwagen zur Anwendung kamen. Das Anschließen der Feder-Dämpfer-Beine jeweils oben an einem am Fahrzeugrahmen befestigten Federbeinhalter und unten an einer Anlenkstelle am Starrachskörper der selbststabilisierenden Verbundlenkerachse, insbesondere so weit wie möglich außen im Sinne einer größtmöglichen Federspur mit von vorne gesehen gepfeilter Anordnung der Federbeine, ergibt einen gewünscht hohen Fahr- und Federungskomfort. Dadurch, dass die Funktion eines das Wanken des Fahrzeuges begrenzenden Stabilisators dem Starrachskörper-Längslenker-Verbund der Verbundlenkerachse aufgeprägt ist, kann auf den herstellungs- und kostenintensiven sowie Bauraum verschlingenden Einbau eines ansonsten bei herkömmlichen schweren Nutzfahrzeugen notwendigen U-förmigen Stabilisators verzichtet werden. Zur Starrachs-Querführung genügt aufgrund der relativ hohen Quersteifigkeit des Starrachskörper-Längslenker-Verbundes und dessen Anlenkung an rahmenfesten Lagerstellen ein Panhardstab. Das vorzugsweise Heranziehen und Ausgestalten eines der beiden Federbeinhalter als rahmenfestes Anlenk-, Halte- und Abstützorgan für den Panhardstab erspart einen ansonsten für diesen Zweck notwendigen eigenen Lagerbock an einer anderen Stelle des Rahmens und schränkt zudem den innerhalb des U-förmigen Querträgers gegebenen Freiraum nicht unnötig ein. Außerdem hilft dies Herstellungs- und Montagekosten sparen. Gleiches gilt auch für die achsseitige Anlenkstelle des Panhardstabes am Starrachskörper-Längslenker-Verbund. Weitere Vorteile der erfindungsgemäßen Lösung sind in der Figurenbeschreibung angegeben.

Nachfolgend ist ein Fahrgestell mit der erfindungsgemäßen Starrachse anhand der Zeichnung und darin aufgezeigter Ausführungsbeispiele verschiedener Details noch näher erläutert. In der Zeichnung zeigen:

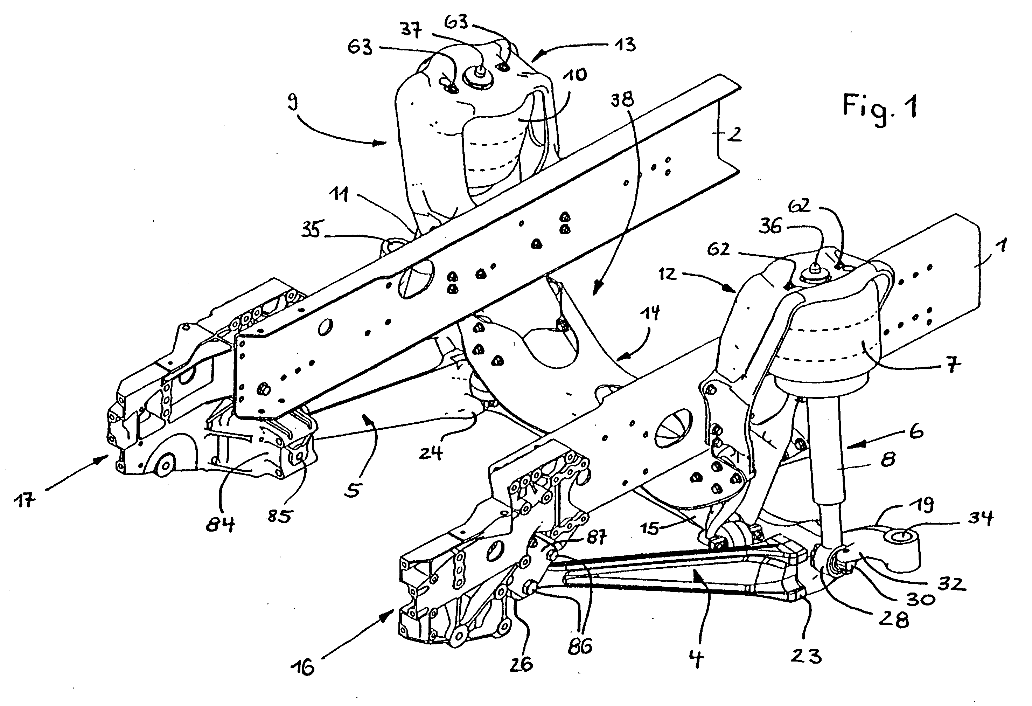

- Fig. 1: perspektivisch den vorderen Endbereich des Fahrgestells eines Frontlenker-Lastkraftwagen (als Beispiel eines schweren Nutzfahrzeuges) mit der erfindungsgemäßen Starrachse samt Aufhängung, Federung und Dämpfung,

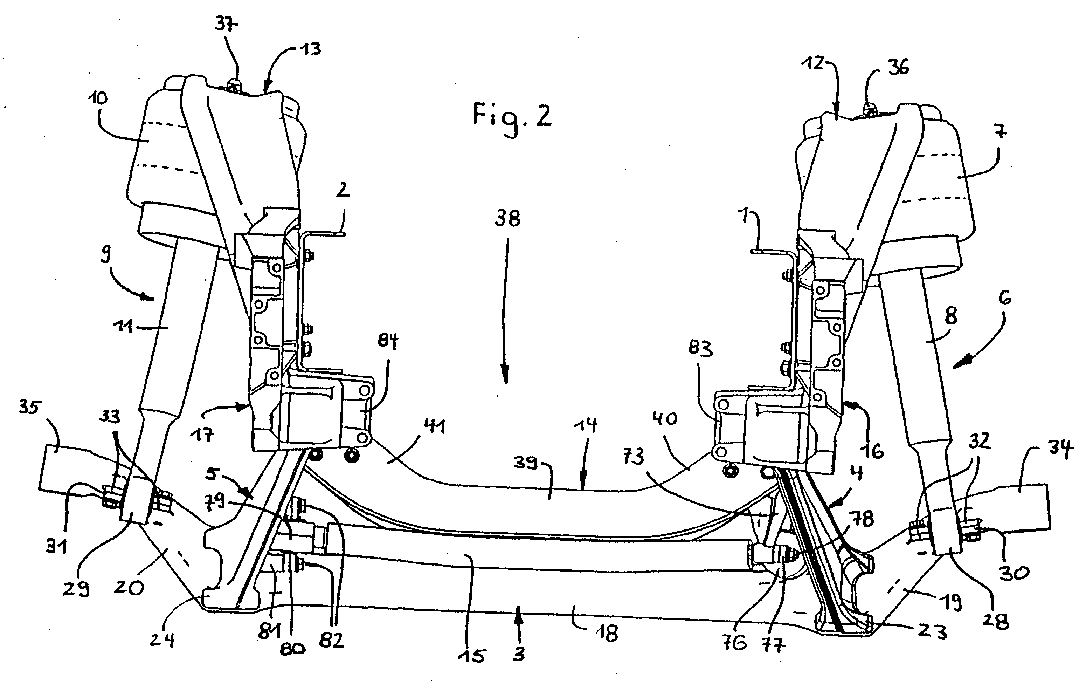

- Fig. 2: den Fahrgestellbereich gemäß Fig. 1 in Ansicht von vorn,

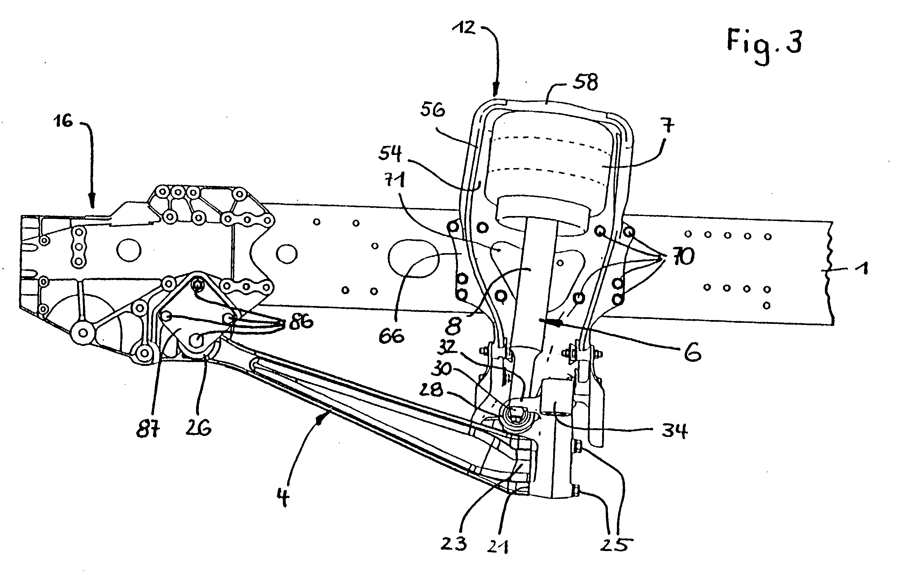

- Fig. 3: den Fahrgestellbereich gemäß Fig. 1 in Seitenansicht,

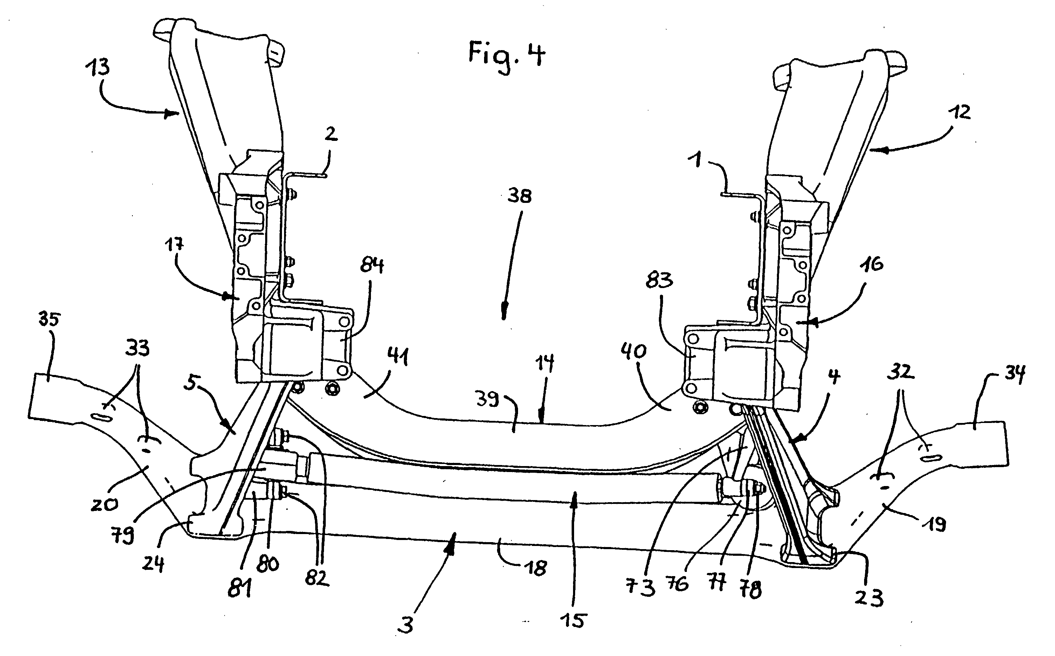

- Fig. 4: die Darstellung gemäß Fig. 2 ohne Federbeine,

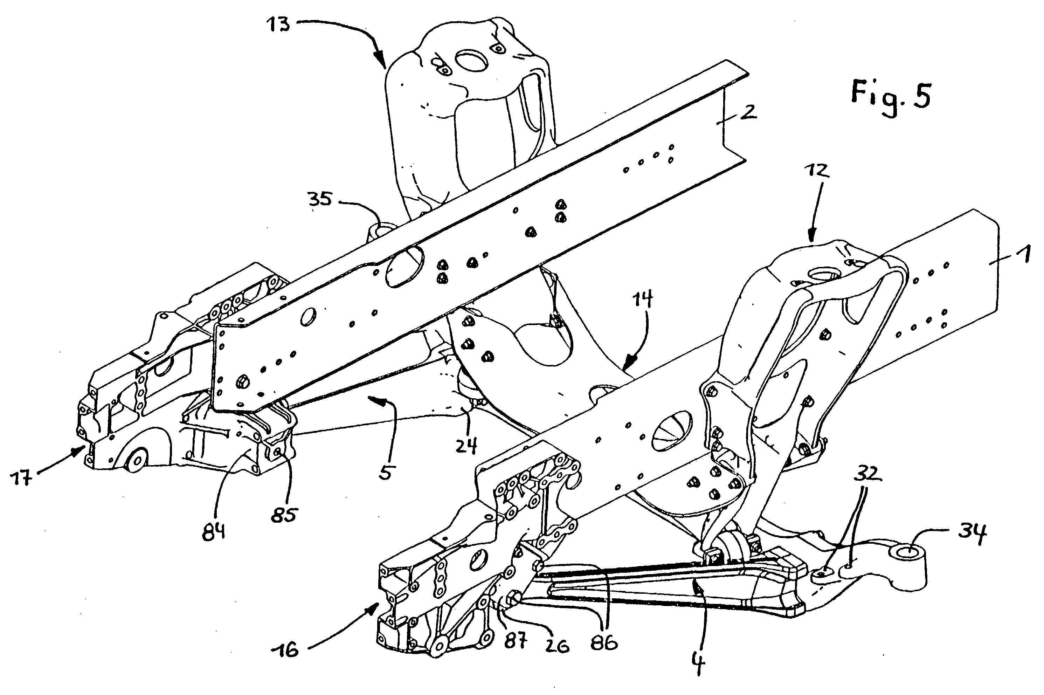

- Fig. 5: die Darstellung gemäß Fig. 1 ohne Federbeine,

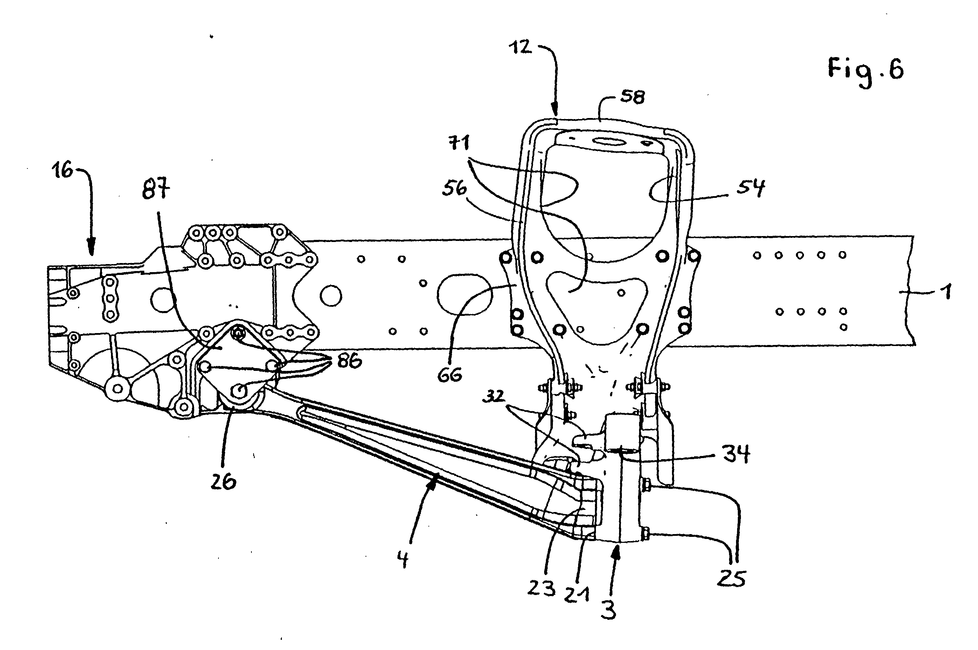

- Fig. 6: die Darstellung gemäß Fig. 3 ohne Federbeine,

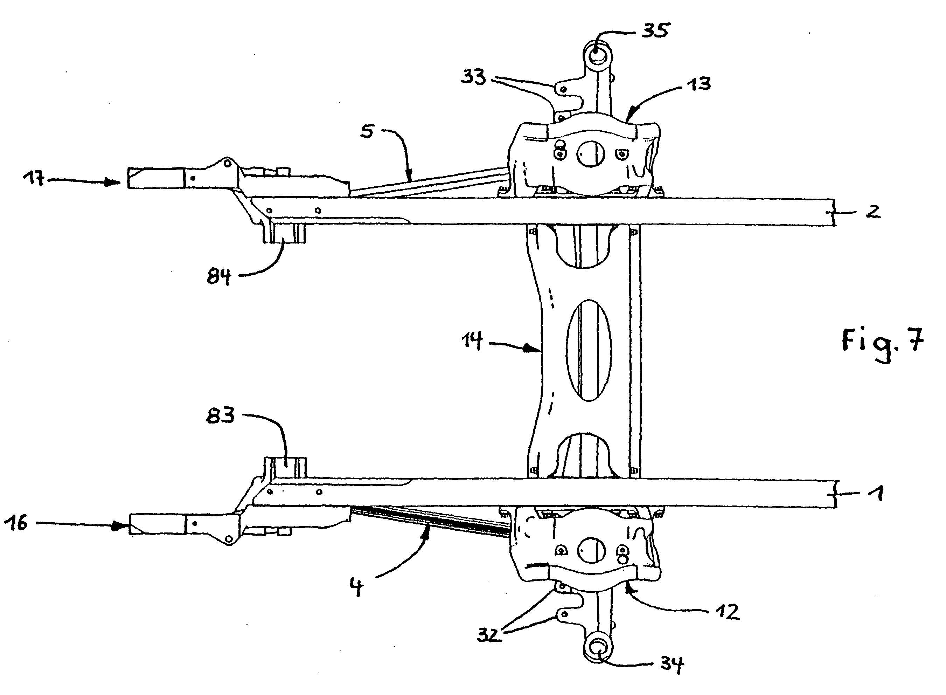

- Fig. 7: die Darstellung gemäß Fig. 4 in Draufsicht ohne Panhardstab,

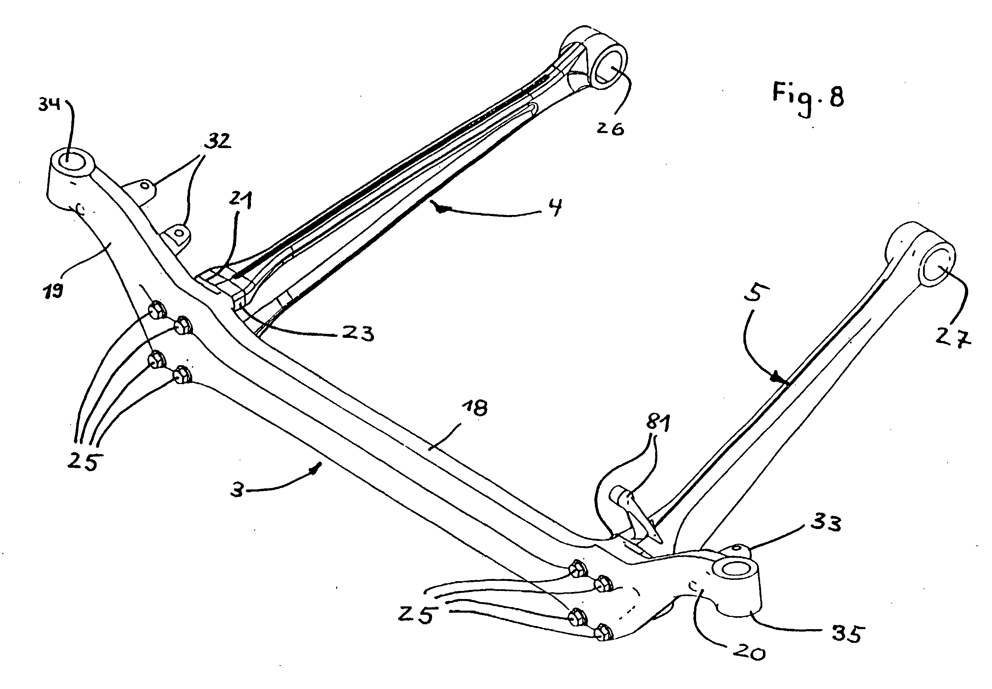

- Fig. 8: den Starrachskörper-Längslenker-Verbund aus den Fig. 1 bis 7 in perspektivischer Alleindarstellung,

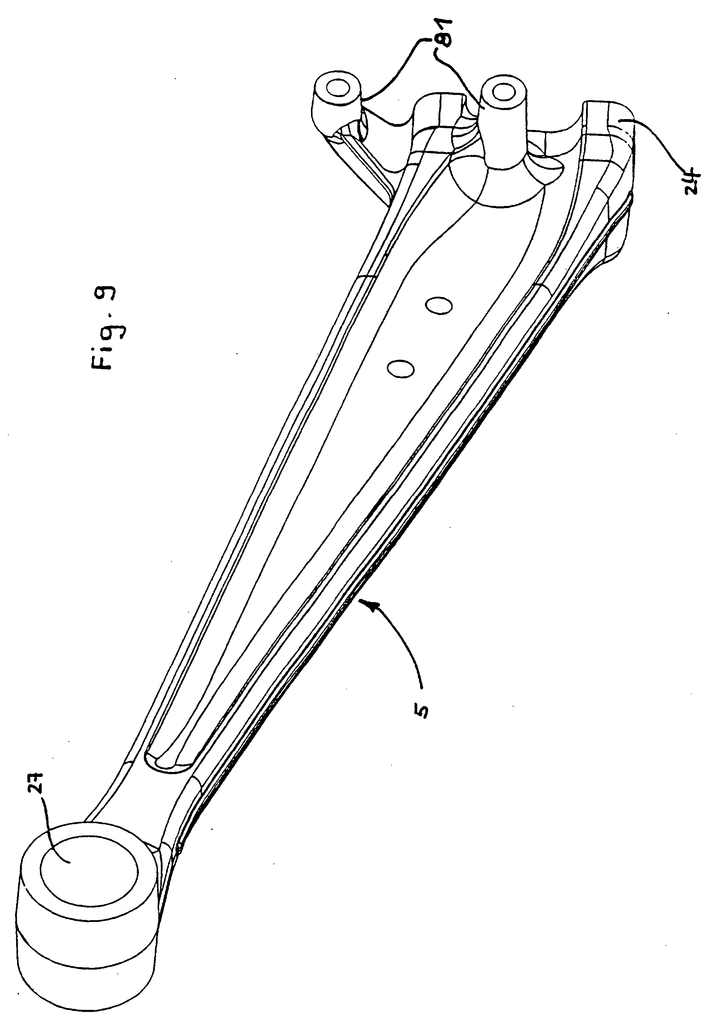

- Fig. 9: einen Längslenker aus dem Starrachskörper-Längslenker-Verbund gemäß Fig. 8 in perspektivischer Alleindarstellung,

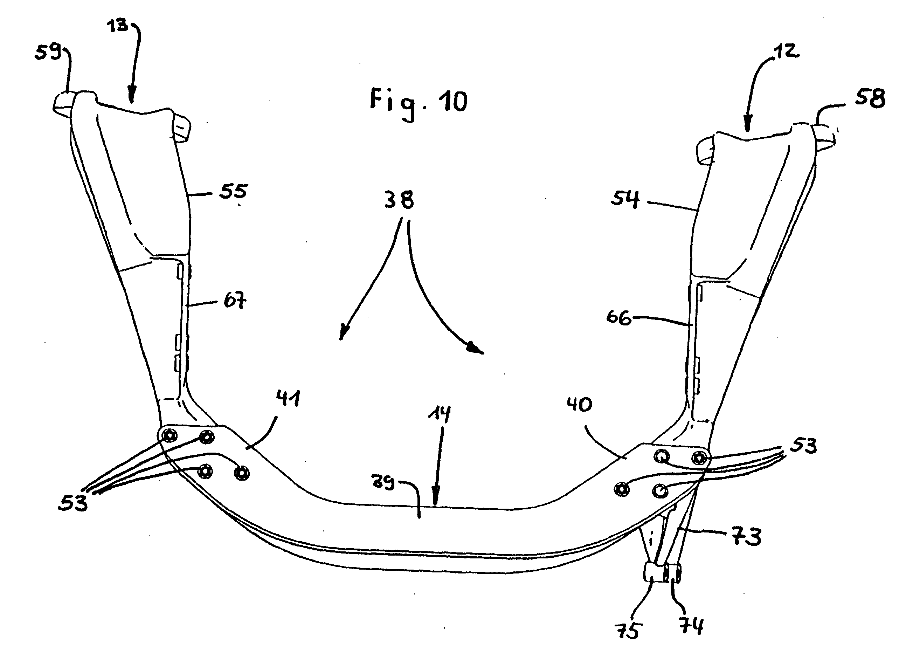

- Fig. 10: den U-förmigen Querträger aus den Fig. 1 bis 7 in vorderansichtiger Alleindarstellung,
- Fig. 11: den U-förmigen Querträger aus den Fig. 1 bis 7 in perspektivischer Alleindarstellung,

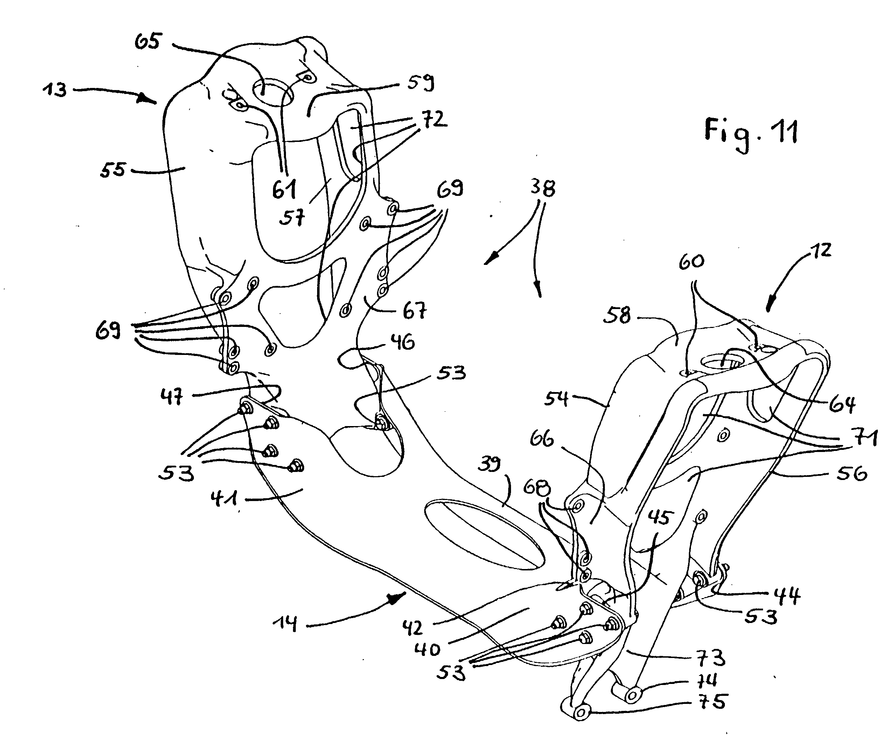

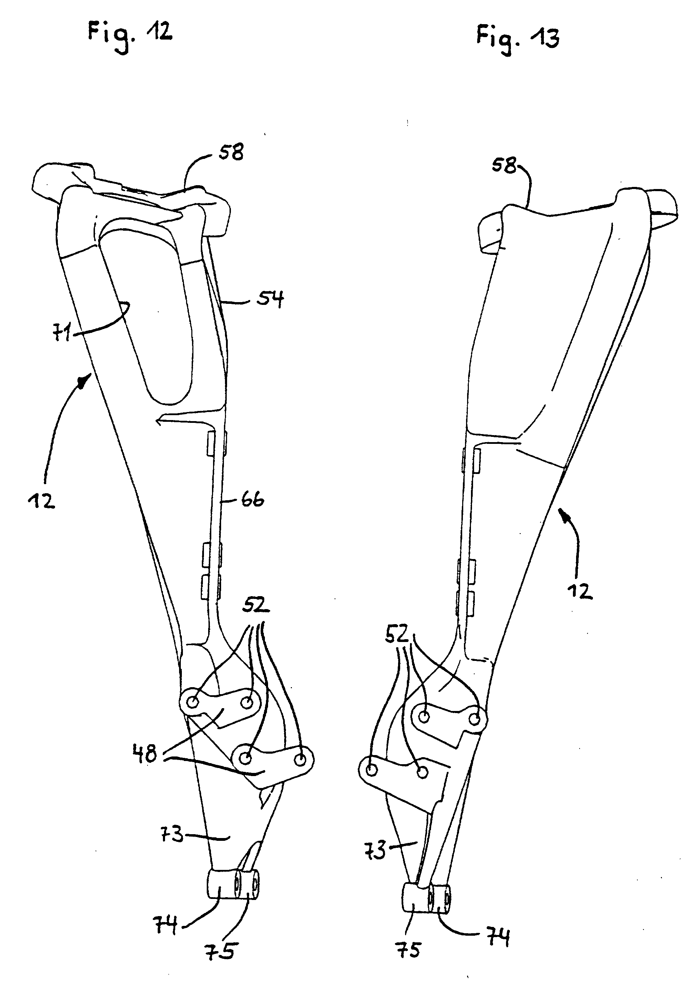

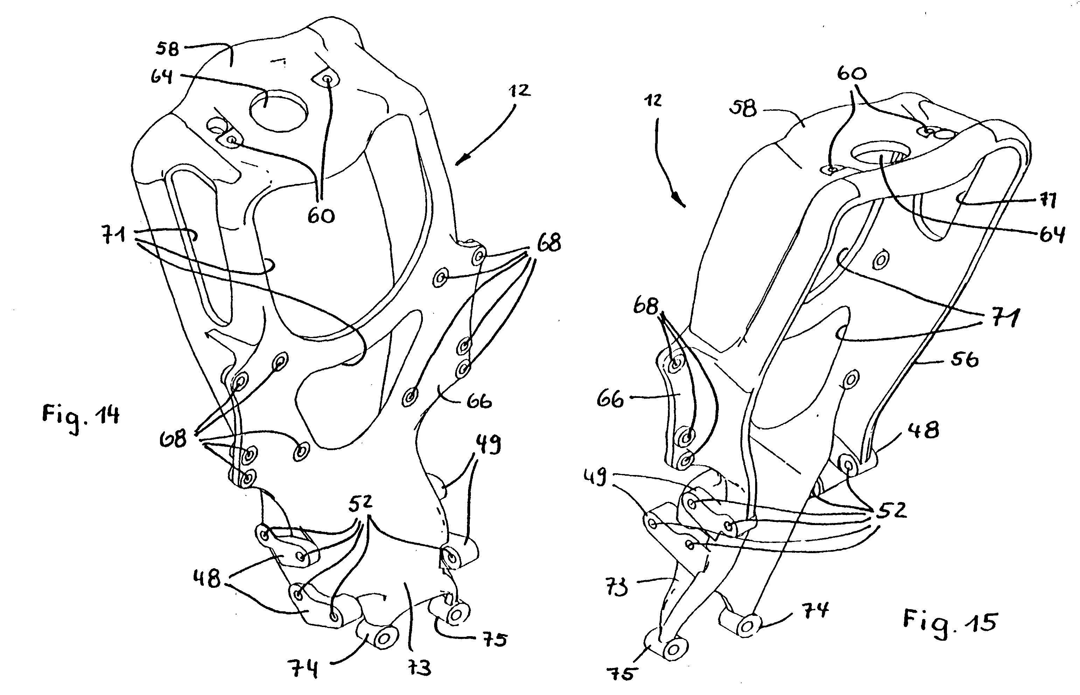

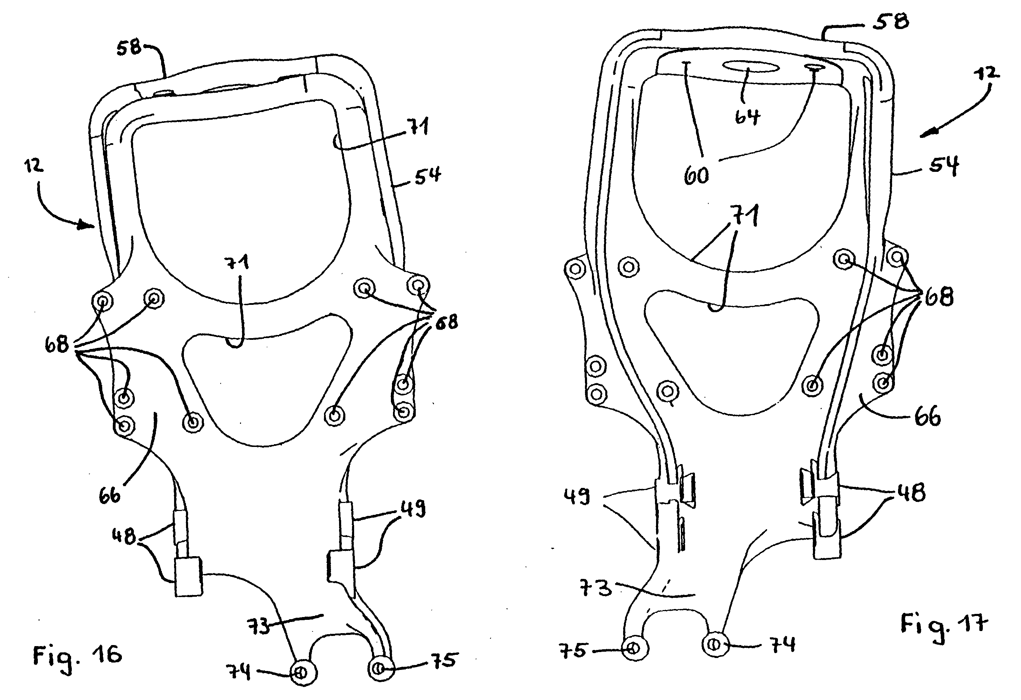

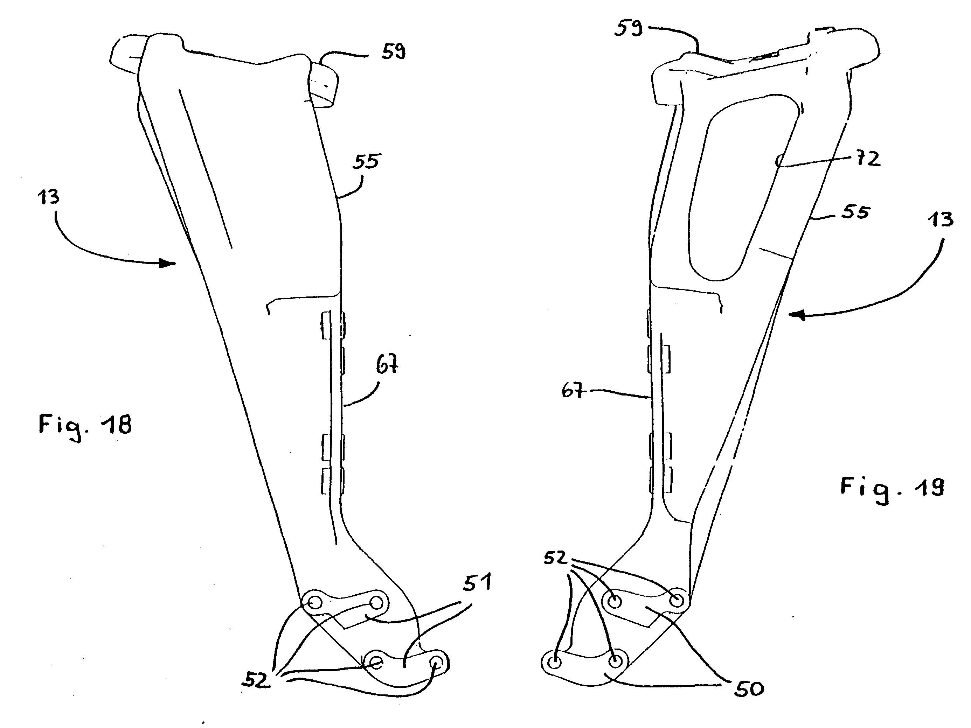

- Fig. 12 bis 17: je eine unterschiedliche Ansicht des einen der beiden Federbeinhalter aus dem U-förmigen Querträger von Fig. 1 bis 7, dem die Zusatzfunktion, eine Anlenkstelle für den Panhardstab zu bilden, aufgeprägt ist,

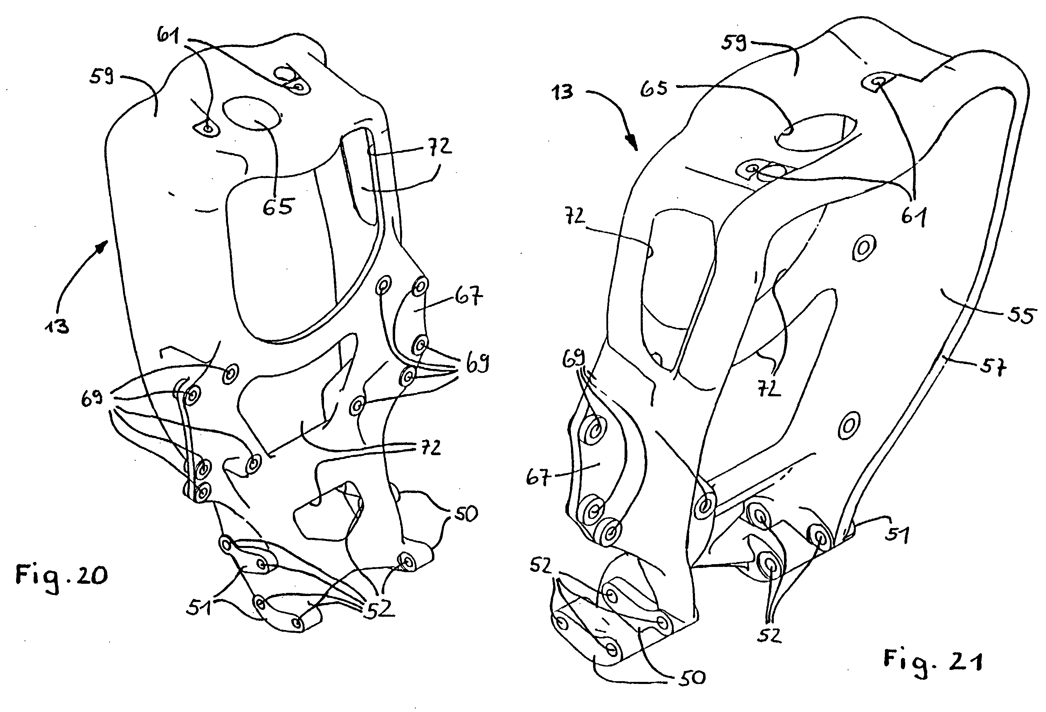

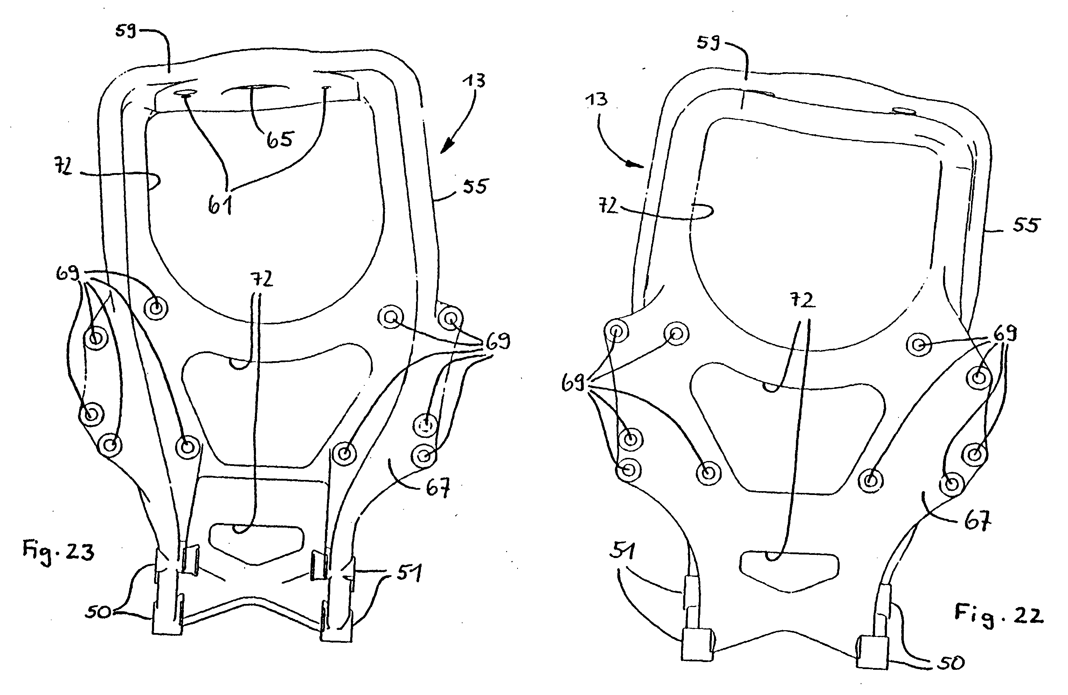

- Fig. 18 bis 23: je eine unterschiedliche Ansicht des anderen der beiden Federbeinhalter aus dem U-förmigen Querträger von Fig. 1 bis 7.

Das erfindungsgemäße Fahrgestell ist Bestandteil eines schweren Nutzfahrzeuges, bei dem es sich um einen Lastkraftwagen insbesondere der Frontlenker-Bauart mit kippbarem Fahrerhaus sowie mit An- und Aufbauten der verschiedensten Art, auch solche für Spezialeinsatzzwecke, eine Sattelzugmaschine oder um einen Omnibus handeln kann. Bei der erfindungsgemäßen Starrachse kann es sich um eine Vorderachse, Vorlaufachse oder Nachlaufachse mit lenkbaren oder nicht-lenkbaren Rädern handeln. In der Zeichnung ist als Beispiel für die erfindungsgemäße Starrachse eine Vorderachse aufgezeigt. Vom Fahrgestell sind in der Zeichnung als wesentliche Teile des Rahmens dessen beide Längsträger mit 1 und 2 bezeichnet. Die erfindungsgemäße Starrachse besteht einschließlich aller Aufhängungs-, Federungsund Dämpfungsorgane aus folgenden Hauptteilen, nämlich einem Starrachskörper 3, einem linken Längslenker 4 und rechten Längslenker 5, einem linken Federbein 6 mit Luft- oder Schraubenfeder 7 und hierzu koaxialem Stoßdämpfer 8, einem rechten Federbein 9 mit Luft- oder Schraubenfeder 10 und hierzu koaxialem Stoßdämpfer 11, einem Panhardstab 15 und einem U-förmigen Querträger 38, der sich im einzelnen aus einem linken Federbeinhalter 12, einem rechten Federbeinhalter 13 und einer Quertraverse 14 zusammensetzt. Mit 16 ist ein linker Multifunktionslagerschild und mit 17 ein rechter Multifunktionslagerschild bezeichnet, von denen jeder außen an einem Rahmen-Längsträger 1, 2 befestigt ist und zur rahmenseitigen Anlenkung der erfindungsgemäßen Starrachse sowie im dargestellten Beispiel darüber hinaus auch als Halte-, Stütz- und Lagerorgan für eine größere Anzahl anzubauender Fahrzeugteile dient.

Die erfindungsgemäße Starrachse ist nach Art einer selbststabilisierenden Verbundlenkerachse ausgebildet. Die bedeutet, daß die Starrachse grundsätzlich so konstruiert ist, daß zu ihrer Querführung nur der Panhardstab 15 notwendig ist und sie ohne den bisher bei schweren Nutzfahrzeugen zur Beschränkung des Wankens notwendigen eigenständigen U-förmigen Stabilisator auskommt, aber dessen Funktion einem Bauteilverbund aufgeprägt ist, der sich aus dem Starrachskörper 3 und den beiden an diesem befestigten Längslenkern 4, 5 zusammensetzt. Dieser Zweckbestimmung und Funktion gehorchend ist der Starrachskörper 3 in einem geraden Mittelbereich 18 zwischen den beiden an ihm angeschlossenen Längslenkern 4, 5 definiert torsionsfähig ausgebildet. Der je nach Anwendungsfall durchgehend gerade oder - wie in der Zeichnung dargestellt - nach Art einer gekröpften Faustachse ausgebildete Starrachskörper 3 wird durch Schmieden oder Gießen hergestellt und anschließend an bestimmten Stellen spanabhebend nach- bzw. endbearbeitet. Das Profil und die Größe des Querschnitts seines Mittelbereiches 18 werden im Sinne der gewünschten Torsionsfähigkeit auf den jeweiligen fahrzeugspezifischen Anwendungsfall abgestimmt. Am Übergangsbereich zwischen geradem Mittelbereich 18 und jedem beiderseits desselben anschließenden, im dargestellten Beispiel hochgekröpften End-abschnitt 19 bzw. 20 ist stirnseitig - im Fall einer gezogenen Achse vorne und im Fall einer geschobenen Achse hinten - am Starrachskörper 3 jeweils ein Ansatz bzw. Vorsprung mit nachbearbeiteter Anlagefläche 21 bzw. 22 mitangeformt, an der jeweils einer der beiden Längslenker 4, 5 mit seinen achskörperseitigen Fuß 23 bzw. 24 kraftschlüssig und gegebenenfalls auch noch formschlüssig angeflanscht ist. Die Anlagefläche 21 bzw. 22 erstreckt sich dabei mit großer Breite vorzugsweise über die ganze am Starrachskörper 3 verfügbare Höhe, um am Starrachskörper 3 eine möglichst große Anschlußbasis für den jeweiligen Längslenker 4 bzw. 5 bereitzustellen. Zur Befestigung sind je Längslenker 4, 5 mehrere Schrauben 25, z. B. je 4 Stück, vorgesehen, die von der gegenüberliegenden Seite des Starrachskörpers 3 her durch in diesem ausgebildete Durchgangsbohrungen hindurchgeführt sowie in hierzu fluchtende Sacklochgewindebohrungen im jeweiligen Längslenker-Fuß 23 bzw. 24 eingeschraubt sind, und zwar mit einer hohen Vorspannkraft und so gesichert, daß der Starrachskörper-Längslenker-Verbund bei allen im Fahrbetrieb auftretenden Belastungen einwandfrei erhalten bleibt. Die beiden, wie der Starrachskörper 3 in die Stabilisatorfunktion eingebundenen Längslenker 4, 5 sind jeweils als Gußteil, gegebenenfalls auch Schmiedeteil hergestellt, anschließend an bestimmten Stellen spanabhebend nach- bzw. endbearbeitet und in der Vertikalen vergleichsweise biegesteif, um ihre Längsachse aber begrenzt tordierbar ausgebildet. Generell sind die beiden Längslenker 4, 5 hinsichtlich ihrer Biegesteifigkeit und Torsionsfähigkeit in Verbindung mit dem torsionsfähigen Starrachskörper 3 auf den Gesamtstabilisierungseffekt des Starrachskörper-Längslenker-Verbundes abgestimmt, und zwar über entsprechende Bemessung und Formgebung ihrer Querschnitte. Im dargestellten Beispiel weist jeder der beiden gleich langen Längslenker 4, 5 zwischen seinem Fuß 23 bzw. 24 und einem andernendes vorhandenen Lagerauge 26 bzw. 27 einen stabförmigen Bereich mit einem sich über die Länge größenmäßig ändernden Querschnitt auf. Zu dem besagten Gesamtstabilisierungseffekt trägt außerdem bei, daß die beiden Längslenker 4, 5 zur Fahrzeuglängsmittelachse spiegelsymmetrisch und - von oben betrachtet - derart gepfeilt zueinander stehend am Starrachskörper 3 angeschlossen sind, daß sie eine Trapezfläche einschließen, wobei der Abstand ihrer Lageraugen 26 bzw. 27, mit denen sie jeweils an den rahmenfest angebrachten Multifunktionslagerschilden 16 bzw. 17 angelenkt sind, kleiner ist als der Abstand ihrer achskörperseitigen Füße 23 bzw. 24. Wenn die erfindungsgemäße Starrachse in das Fahrzeug eingebaut ist, verlaufen die beiden Längslenker 4, 5 - von der Seite her betrachtet - vom Starrachskörper 3 ausgehend schräg nach oben gerichtet zu den rahmenseitigen Multifunktionslageschilden 16 bzw. 17 hin.

Die erfindungsgemäße Starrachse garantiert einen bisher noch nie in einem Nutzfahrzeug dargestellten Fahr- und Federungskomfort. Dieser erreicht ein Optimum, wenn die größtmögliche Federspur festgelegt ist, das heißt, jedes der beiden Federbeine 6 bzw. 9 an seinem unteren Ende z. B. über ein in ein dortiges Lagerauge 28 bzw. 29 eingebautes Pratzengelenk 30 bzw. 31 an einer achskörperfesten Lagerstelle angelenkt ist, die räumlich im Bereich zwischen einem Längslenker 4 bzw. 5 und einem benachbarten achskörperendigen Radträger-Anschlußkopf 34 bzw. 35 so weit wie möglich zu letzterem hin gerückt angeordnet und jeweils durch einen am Starrachskörper 3 angebauten oder mitangeformten maulartigen Bock 32 bzw. 33 gebildet ist. Garant für einen hohen Fahr- und Federungskomfort ist auch, daß die beiden Federbeine 6 bzw. 9 - von vorne gesehen - gepfeilt zueinander stehend ins Fahrzeug eingebaut sind, derart, daß ihre oberen Enden 36 bzw. 37 weniger weit voneinander beabstandet sind als ihre untenendigen Lageraugen 28 bzw. 29. Von der Seite her gesehen steht jedes Federbein 6 bzw. 9 entweder vertikal oder ist je nach dem, ob es sich um eine geschobene oder - wie dargestellt - gezogene Starrachse handelt, leicht nach vorn oder hinten geneigt angeordnet.

Mit seinem oberen Ende 36 bzw. 37 ist jedes Federbein 6 bzw. 9 räumlich oberhalb und seitlich außerhalb des benachbarten Rahmenlängsträgers 1 bzw. 2 an einem der beiden Federbeinhalter 12 bzw. 13 abgestützt und befestigt. Die beiden Federbeinhalter 12 bzw. 13 bilden zusammen mit der Quertraverse 14 den -von vorne gesehen - erfindungsgemäßen U-förmigen Querträger 38, der den Starrachskörper 3 und den Panhardstab 15 oben mit geringem Abstand dachbildend überbrückt und außerdem die beiden Rahmen-Längsträger 1, 2 stabilisierend miteinander verbindet.

Innerhalb des U-förmigen Querträgers 38 ist dessen Quertraverse 14 durch ein im Querschnitt hutförmiges Blechpreßteil, gegebenenfalls auch Schmiede- oder Gußteil, gebildet, das einen geraden Mittelabschnitt 39 und beiderseits desselben je einen, vorzugsweise schräg hochgezogenen Endabschnitt 40 bzw. 41 aufweist Dessen äußere Enden sind nach Art eines Maules ausgebildet, mit dem der anzuschließende Federbeinhafter 12 bzw. 13 außen übergriffen wird. Jedes Maul wird durch einen Ausschnitt 42 bzw. 43 im Obergurt der Quertraverse 14 und beiderseits jedes Ausschnitts 42 bzw. 43 verbleibende Wangen 44, 45 bzw. 46, 47 gebildet, denen am jeweiligen Federbeinhalter 12 bzw. 13 vorn und hinten zugehörige Anlageflächen 48, 49 bzw. 50, 51 zugeordnet sind. Im Bereich dieser Anlageflächen 48, 49 bzw. 50, 51 ist die Quertraverse 14 mit ihren Wangen 44, 45 bzw. 46, 47 abgestützt und dort durch entsprechende Bohrungen bzw. Löcher 52 durchdringende Schrauben 53 mit dem jeweiligen Federbeinhalter 12 bzw. 13 fest verbunden. In der Mitte seines Obergurtes kann die Quertraverse 14 zur Gewichtsreduzierung einen oder mehrere Durchbrüche aufweisen.

Die beiden Federbeinhalter 12 bzw. 13 sind vorzugsweise jeweils durch ein Stahlgußteil realisiert, das nach dem Abguß an erforderlichen Stellen spanabhebend nach - bzw. endbearbeitet wird. Jeder Federbeinhalter 12 bzw. 13 ist dabei, was seine Form anbelangt, zumindest in seinem oberen Bereich nach Art einer nach außen offenen Halbschale 54 bzw. 55 ausgebildet, von deren Begrenzungswand 56 bzw. 57 das zugehörige Federbein 6 bzw. 9 im Bereich seiner Luft- oder Schraubenfeder 7 bzw. 10 radial außen mit geringem Abstand von innen her partiell überdeckt wird und an deren Kopfplatte 58 bzw. 59 das jeweilige Federbein 6 bzw. 9 obenendig abgestützt und mittels je zwei Löcher 60 bzw. 61 durchdringenden Verschraubungen62 bzw. 63 befestigt ist. Ein Zentralloch 64 bzw. 65 in der Federbein-Kopfplatte 58 bzw. 59 dient zur Zentrierung des jeweiligen Federbeines 12 bzw. 13 und freien Durchtritt von dessen oberem Ende 36 bzw. 37. Etwa in seinem mittleren Höhen-Bereich weist jeder Federbeinhalter 12 bzw. 13 außenseitig an der Halbschale 54 bzw. 55 anschließend einen Anschlußflansch 66 bzw. 67 mit mehreren Schraubenlöchern 68 bzw. 69 auf. Mit den jeweiligen Anschlußflansch 66 bzw. 67, der etwa im Schubmittelpunkt gegeben ist, ist jeder der beiden Federbeinhalter 12 bzw. 13 außen am zugehörigen Rahmen-Längsträger 1 bzw. 2 angeflanscht und dort jeweils mittels mehrerer die Löcher 68 bzw. 69 und hierzu längsträgerintern fluchtende Löcher durchdringender Schrauben 70 mit zugehörigen Muttern befestigt. Verschiedene Durchbrüche 71 bzw. 72 in den Federbeinhaltern 12 bzw. 13 dienen zu deren Gewichtsreduzierung.

Einem der beiden Federbeinhalter 12 bzw. 13 ist über seine eigentliche Funktion hinaus eine weitere Funktion aufgeprägt, nämlich jene, das rahmenseitige Abstütz-, Halte- und Anlenkorgan für das eine Ende des Panhardstabes 15 zu bilden. Zu diesem Zweck ist der betreffende Federbeinhalter 12 bzw. 13 nach unten durch ein Lagerschild 73 verlängert, an dessen unterem Ende ein Maul und beiderseits desselben je ein Lagerauge 74 bzw. 75 ausgebildet sind, an denen der Panhardstab 15 z. B. über ein in sein einenendiges Lagerauge 76 eingebautes Pratzengelenk 77 und zugehörige Schrauben 78 befestigt ist.

Mit seinem anderen, gegenüberliegenden Ende ist der Panhardstab 15 z. B. über ein in das dortige Lagerauge 79 eingebautes Pratzengelenk 80 an geeigneter Stelle des Starrachskörper-Längslenker-Verbundes angelenkt. Für den Fall der Anlenkung am Starrachskörper 3 ist an diesem ein Anschlußbock vorzugsweise mitangeformt, an dem eine entsprechende Anlagefläche und Gewindebohrungen für die Anschraubung des Pratzengelenkes 80 angearbeitet sind. Im dargestellten Beispiel ist als Anlenkstelle einer der beiden Längslenker 4 bzw. 5 gewählt. Hierfür ist an diesem angebaut oder - wie dargestellt - mitangeformt ein seitlich nach innen vorspringender maulartiger Lagerbock 81 mit äußerer stirnseitiger Anlagefläche und zwei internen Sackgewindelöchern vorgesehen, an dem das Pratzengelenk 80 abstützbar und mittels Schrauben 82 befestigbar ist.

Der als im wesentlichen gerader Stab mit den endseitig angeschmiedeten Lageraugen 76, 79 ausgebildete Panhardstab 15 erstreckt sich aufgrund der wie vorstehend angegebenen Anlenkung annähernd parallel oder leicht schräg zum Mittelbereich 18 des Starrachskörpers 3 verlaufend.

An jedem der beiden Längslenker 4, 5 oder dem Starrachskörper 3 je Achsseite ist ein Bock für das Ansetzen und Abstützen eines Wagenhebers entweder mitangeformt oder angebaut.

Die beiden Multifunktionslagerschilde 16, 17 weisen jeweils einen zur Fahrzeugmitte hin abragenden Vorsprung 83 bzw. 84 auf. In dem von außen freien Innenraum jedes der beiden Vorsprünge 83, 84 ist eine Anlenkstelle für die Starrachse gegeben, und zwar in Form einer Anlagefläche und einer Querbohrung 85, in die bei Montage ein das vordere Längslenker-Lagerauge 26 bzw. 27 durchdringender Lagerbolzen eingebaut wird. Anschließend wird jede dieser beiden Lagerstellen von außen her durch einen mittels mehrerer Schrauben 86 am Multifunktionslagerschild 16 bzw. 17 befestigten Deckel 87 gesichert.

## Patentansprüche

1. Fahrgestell eines schweren Nutzfahrzeuges, mit einem Rahmen, dessen beide Längsträger (1, 2) über mehrere Querträger miteinander verbunden sind, und mit mehreren Achsen, von denen wenigstens eine eine Starrachse ist, über deren Starrachskörper (3) sich ein von vorne gesehen U-förmiger, die beiden Rahmen-Längsträger (1, 2) verbindender Querträger (38) und ein zu deren Querführung dienender Panhardstab (15) erstreckt, **gekennzeichnet durch** folgende Merkmale:
a) die Starrachse, bei der es sich um eine Vorder-, Vorlauf- oder Nachlaufachse handeln kann, ist nach Art einer selbststabilisierenden Verbundlenkerachse ausgebildet,
b) bei der Verbundlenkerachse ist die Funktion eines das Wanken des Nutzfahrzeuges begrenzenden Stabilisators einem Starrachskörper-Längslenker-Verbund aufgeprägt, der aus dem Starrachskörper (3) und zwei an diesem angeordneten Längslenkern (4, 5) besteht, wobei
b1) die beiden Längslenker (4, 5) weit voneinander beabstandet jeweils stirnseitig vorn oder hinten am Starrachskörper (3) mittels Schrauben (25) kraftschlüssig und gegebenenfalls auch formschlüssig angeflanscht befestigt sind,
b2) der Starrachskörper (3) in einem geraden Mittelbereich zwischen den angeschlossenen Längslenkern (4, 5) definiert torsionsfähig ausgebildet ist,
b3) die beiden Längslenker (4, 5) in Vertikalrichtung gesehen vergleichsweise biegesteif, um ihre Längsachse aber begrenzt tordierbar ausgebildet und hinsichtlich ihrer Biegesteifigkeit sowie Torsionsfähigkeit auf den Gesamtstabilisierungseffekt in Verbindung mit dem torsionsfähigen Starrachskörper (3) **durch** entsprechende Bemessung und Formgebung der hierfür maßgeblichen Querschnitte abgestimmt sind,
b4) der Starrachskörper-Längslenker-Verbund mit den freien Enden der beiden Längslenker (4, 5) an rahmenfesten Lagerböcken (16, 17) angelenkt ist,
c) der zur Querführung vorgesehene Panhardstab (15) ist einenendes am Starrachskörper-Längslenker-Verbund (3; 4, 5) und andernendes mittelbar am Rahmen (1, 2) angelenkt,
d) je Achsseite ist ein aus einer Luft- oder Schraubenfeder (7, 10) und einem hierzu koaxialen Stoßdämpfer (8, 11) bestehendes Federbein (6, 9) vorgesehen, wobei jedes Federbein (6, 9)
d1) mit seinem unteren Ende am Starrachskörper (3) angelenkt ist und
d2) mit seinem oberen Ende an einem Federbeinhalter (12, 13) befestigt ist,
e) die beiden Federbeinhalter (12, 13) sind Bestandteile des U-förmigen Querträgers (38) und bilden dessen Seitenteile, über die er mit den beiden Rahmen-Längsträgern (1, 2) in Rahmen-stabilisierender Weise verbunden ist.

2. Fahrgestell nach Anspruch 1, **dadurch gekennzeichnet, daß** der U-förmige Querträger (38) aus drei Teilen besteht, nämlich den beiden Federbeinhaltern (12, 13) und einer dachbildend den Starrachskörper (3) sowie den Panhardstab (15) oben mit geringem Abstand überbrückenden Quertraverse (14), an deren Enden die beiden Federbeinhalter (12, 13) angeschlossen sind.

3. Fahrgestell nach Anspruch 2, **dadurch gekennzeichnet, daß** die Quertraverse (14) des U-förmigen Querträger (38) durch ein im Querschnitt hutförmiges Blechpreß-, Guß- oder Schmiedeteil gebildet ist, dessen links- und rechtsseitiger Außenbereich nach Art eines Maules ausgebildet ist, in das ein Federbeinhalter (12, 13) mit einem Anschlußbereich eingepaßt und dort mittels mehrerer Schrauben (53) an der Quertraverse (14) befestigt ist.

4. Fahrgestell nach einem der Ansprüche 2 und 3, **dadurch gekennzeichnet, daß** die Quertraverse (14) des U-förmigen Querträgers (38) einen geraden Mittelabschnitt (39), mit dem sie den Starrachskörper (3) und den Panhardstab (15) mit geringem Abstand überdeckt, und beiderseits des Mittelabschnitts (39) je einen schräg hochgezogenen Endabschnitt (40, 41) aufweist, dessen Ende nach Art eines Maules ausgebildet ist.

5. Fahrgestell nach einem der Ansprüche 3 und 4, **dadurch gekennzeichnet, daß** jedes zum Anschluß eines Federbeinhalters (12, 13) vorgesehene Maul durch einen endseitigen Ausschnitt (42, 43) im Obergurt der Quertraverse (14) und beiderseits jedes Ausschnitts (42, 43) verbleibende Wangen (44, 45; 46, 47) gebildet ist, denen am jeweiligen Federbeinhalter (12, 13) vorn und hinten zugehörige Anlageflächen (48, 49 bzw. 50, 51) zugeordnet sind, in deren Bereich die Quertraverse (14) mit ihren Wangen (44, 45; 46, 47) abgestützt und dort auch entsprechende Bohrungen bzw. Löcher (52) durchdringende Schrauben (53) mit dem der jeweilige Federbeinhalter (12, 13) fest verbunden ist.

6. Fahrgestell nach einem der vorhergehenden Ansprüche, **dadurch gekennzeichnet, daß** jeder Federbeinhalter (12, 13) zumindest in seinem oberen Bereich nach Art einer nach außen offenen Halbschale (54, 55) ausgebildet ist, von deren Begrenzungswand (56, 57) das zugehörige Federbein (6, 9) im Bereich seiner Luft- oder Schraubenfeder (7, 10) radial außen mit geringem Abstand von innen her partiell überdeckt wird und an deren Kopfplatte (58, 59) das jeweilige Federbein (6, 9) obenendig abgestützt und mittels je zwei Löcher (60, 61) durchdringenden Verschraubungen (62, 63) befestigt ist, wobei ein Zentralloch (64, 65) in der Federbein-Kopfplatte (58, 59) zur Zentrierung des jeweiligen Federbeines (12, 13) und freien Durchtritt von dessen oberem Ende (36, 37) dient.

7. Fahrgestell nach Anspruch 6, **dadurch gekennzeichnet, daß** jeder Federbeinhalter (12, 13) etwa in seinem mittleren Höhenbereich einen außenseitig an der Halbschale (54, 55) anschließenden Anschlußflansch (66, 67) mit mehreren Schraubenlöchern (68, 69) aufweist, daß dieser Anschlußflansch (66, 67) etwa im Schubmittelpunkt gegeben ist, und daß jeder Federbeinhalter (12, 13) mit seinem Anschlußflansch (66, 67) über die Schraubenlöcher (68, 69) und hierzu längsträgerintern fluchtende Löcher durchdringende Schrauben (70) und zugehörigen Muttern am jeweiligen Rahmen-Längsträger (1, 2) angeflanscht befestigt ist.

8. Fahrgestell nach einem der Ansprüche 2 bis 7, **dadurch gekennzeichnet, daß** in der Quertraverse (14) und den Federbeinhaltern (12, 13) des U-förmigen Querträgers (38) an geeigneten Stellen zur Gewichtsreduzierung dienende Löcher oder Durchbrüche vorgesehen sind.

9. Fahrgestell nach einem der vorhergehenden Ansprüche, **dadurch gekennzeichnet, daß** innerhalb des U-förmigen Querträgers (38) einem der beiden Federbeinhalter (12, 13) über seine eigentliche Funktion hinaus noch jene Funktion aufgeprägt ist, nämlich das rahmenfeste Abstütz-, Halte- und Anlenkorgan für das eine Ende des Panhardstabes (15) zu bilden.

10. Fahrgestell nach Anspruch 9, **dadurch gekennzeichnet, daß** einer der beiden Federbeinhalter (12, 13), um das Anlenkorgan für den Panhardstab (15) zu bilden, nach unten durch ein Lagerschild (73) verlängert ist, an dessen unterem Ende ein Maul und beiderseits desselben je ein Lagerauge (74, 75) ausgebildet sind, an denen der Panhardstab (15) über ein in sein einenendiges Lagerauge (76) eingebautes Pratzengelenk (77) und zugehörige Schrauben (78) befestigt ist.

11. Fahrgestell nach einem der Ansprüche 1, 9 und 10, **dadurch gekennzeichnet, daß** der Panhardstab (15) mit seinem anderen, gegenüberliegenden Ende über ein in das dortige Lagerauge (79) eingebautes Pratzengelenk (80) an geeigneter Stelle des Starrachskörper-Längslenker-Verbundes angelenkt ist.

12. Fahrgestell nach Anspruch 11, **dadurch gekennzeichnet, daß** der Panhardstab (15) über das Pratzengelenk (80) an einem Lagerbock (81) angeschlossen wird, der entweder am Achskörper (3) oder einem der beiden Längslenker (4, 5) entweder mitangeformt oder dort angebaut ist und an dem eine entsprechende Anlagefläche und Gewindebohrungen für die Abstützung des Pratzengelenkes (80) und dessen Befestigung mittels Schrauben (82) vorgesehen sind.

13. Fahrgestell nach Anspruch 1, **dadurch gekennzeichnet, daß** die je Achsseite eine Anlenkstelle (32, 33) für das untere Ende (28, 29) eines Federbeines (6, 9) am Starrachskörper (3) so weit wie möglich zu einem außenendigen Radträger-Anschlußkopf (34, 35) hingerückt angeordnet ist, daß sich eine größtmögliche Federspur und eine - von vorne gesehen - gepfeilte Anordnung der beiden Federbeine (6, 9) ergibt, bei der die oberen Enden (36, 37) derselben weniger weit voneinander beabstandet sind als deren untere Enden (28, 29), und daß jedes der beiden Federbeine (6, 9) - von der Seite her gesehen - entweder vertikal oder leicht nach vorn oder hinten geneigt angeordnet ist.

14. Fahrgestell nach Anspruch 13, **dadurch gekennzeichnet, daß** jedes der beiden Federbeine (6, 9) an seinem unteren Ende über ein in ein dortiges Lagerauge (28, 29) eingebautes Pratzengelenk (30, 31) an einer achskörperfesten Lagerstelle angelenkt ist, die durch einen am Starrachskörper (3) so weit wie möglich zu jeweils einem achskörperendigen Radträger-Anschlußkopf (34, 35) hingerückten, angebauten oder mitangeformten maulartigen Bock (32 bzw. 33) gebildet ist.

15. Fahrgestell nach Anspruch 1, **dadurch gekennzeichnet, daß** die beiden Längslenker (4, 5) jeweils durch ein Schmiede- oder Gußteil realisiert sind, das nach dem Ausformen an entsprechenden Stellen spanabhebend nach- bzw. endbearbeitet wird und an dem dann, wenn dort die Anschlußstelle für das eine Ende des Panhardstabes (15) vorgesehen ist, der maulartige Lagerbock (81) nahe zur Anschlußstelle am Achskörper (3) hingerückt seitlich nach innen vorspringend am Fuß (23, 24) des Längslenkers (4, 5) befestigt oder integral mitangeformt ist.

16. Fahrgestell nach Anspruch 1, **dadurch gekennzeichnet, daß** an jedem der beiden Längslenker (4, 5) oder dem Starrachskörper (3) je Achsseite ein Bock für das Ansetzen und Abstützen eines Wagenhebers entweder angebaut oder mitangeformt ist.

## Claims

1. A chassis of a heavy-duty commercial vehicle with a frame whose two longitudinal members (1, 2) are connected with each other by means of several cross-members, and with several axles, of which at least one is a rigid axle over whose rigid axle beam (3) a cross-member (38) - U-shaped when viewed from the front - extends, joining the two longitudinal frame members (1, 2) with each other, and also a Panhard rod (15) designed to provide lateral guidance to said rigid axle, said chassis being **characterised by** the following features:
a) the rigid axle, which may be of the front, leading, or trailing type, being designed as a self-stabilising twist-beam axle
b) in the twist-beam axle, the function of a stabiliser limiting the rolling motion of the commercial vehicle being invested in an axle beam-longitudinal arm assembly consisting of the rigid axle beam (3) and of two longitudinal arms (4, 5) provided on the latter,
b1) the two longitudinal arms (4, 5) being spaced a wide distance apart, the front face of each of them being flanged onto the front or rear side of the rigid axle beam in a non-positive or, if necessary, in a positive connection by means of bolts (25)
b2) the rigid axle beam (3) being designed to have a defined torsional capability in a straight central area (18) interposed between the attached longitudinal arms (4, 5)
b3) the two longitudinal arms (4, 5), if viewed vertically, being designed to have comparatively great flexural strength but limited torsional capability about their longitudinal axis and, in respect of their flexural strength and torsional capability, being adapted to the overall stabilising effect in conjunction with the torsion-capable rigid axle beam (3) through the suitable dimensioning and shaping of the cross-sections crucial to this
b4) said axle beam-longitudinal arm assembly being coupled to frame-mounted bearing supports (16, 17) at the free ends of its two longitudinal arms (4, 5)
c) the Panhard rod (15) provided for the lateral guidance of said rigid axle being coupled at one end with the assembly consisting of the rigid axle beam and the longitudinal arms (3; 4, 5), its other end being coupled directly with the frame 1, 2)
d) each axle side being provided with a spring strut (6, 9) consisting of an air or helical spring (7, 10) and of a shock absorber (8, 11) arranged coaxially to the latter, each of said spring struts (6, 9)
d1) being coupled at its lower end to said rigid axle beam (3) and
d2) being fastened at its upper end to a spring strut holder (12, 13);
e) the two spring strut holders (12, 13) being part of a U-shaped cross-member (38) and forming the side elements of the same by means of which it is connected with the two longitudinal frame members (1, 2) in a frame-stabilising manner.

2. A chassis according to claim 1, **characterised in that** the U-shaped cross-member (38) consists of three parts, namely the two spring strut holders (12, 13) and a transverse beam (14) covering and, with but a slight clearance, spanning the rigid axle beam (3) and the Panhard rod (15), and to whose ends the two spring strut holders (12, 13) are connected.

3. A chassis according to claim 2, **characterised in that** the transverse beam (14) belonging to the U-shaped cross-member (38) consists of a sheet steel stamping or of a forged or cast part, with a hat-shaped cross-section, and that the left and right outer sections of said stamping or forged or cast part are each shaped like a jaw into which a spring strut holder (12, 13) is fitted via a connecting surface and then fastened there to the transverse beam (14) by means of several bolts (53).

4. A chassis according to either of claims 2 or 3, **characterised in that** the transverse beam (14) belonging to the U-shaped cross-member (38) has a straight central area (39) with which it covers the rigid axle beam (3) and the Panhard rod (15) with but a slight clearance, and having, on each side of said central area (39), an obliquely upwards-curved end section (40, 41), the end of which is shaped like a jaw.

5. A chassis according to either of claims 3 or 4, **characterised in that** each jaw intended for the connection of a spring strut holder (12, 13) is formed by a notch (42, 43) in the extremity of the upper flange of the transverse beam (14) and by cheeks (44, 45; 46, 47) remaining on each side of each notch (42, 43), to which cheeks associated contact surfaces (48, 49; 50, 51) on the front and rear parts of the respective spring strut holders (12, 13) are assigned, in the area of which contact surfaces (48, 49; 50, 51) the transverse beam (14) is supported by its cheeks (44, 45; 46, 47) and firmly connected with the respective spring strut holders (12, 13) by means of bolts (53) passing through the corresponding drill and bolt holes (52) provided in said contact surfaces.

6. A chassis according to one of the foregoing claims, **characterised in that** each of the spring strut holders (12, 13) is, at least in its upper area, designed as a half shell (54, 55) open towards the outside, the associated spring strut (6, 9), in the area of its air or helical spring (7, 10), being partially covered radially on the outside, and with but small clearance from the inside, by the limiting wall (56, 57) of said half shell, by whose covering plate (58, 59) the upper end of each spring strut (6, 9) is supported and on which it is fastened by means of bolted connections (62, 63), each passing through two holes (60, 61), a central hole (64, 65) in the spring strut covering plate (58, 59) being provided for centring each spring strut (12, 13) and for the free passage of its upper end (36, 37).

7. A chassis according to claim 6, **characterised in that** each of the spring strut holders (12, 13) has, approximately halfway up, a connecting flange (66, 67) with several bolt holes (68, 69) that is flanged onto the outside of the half shell (54, 55), that said connecting flange (66, 67) is located roughly in the thrust centre, and that each of the spring strut holders (12, 13) is flanged onto the respective longitudinal frame member (1, 2) by means of its connecting flange (66, 67), with the aid of bolts (70) and associated nuts, said bolts passing through the bolt holes (68, 69) and through the holes aligned to these on the inside of the longitudinal member.

8. A chassis according to one of claims 2 to 7, **characterised in that** holes or openings are provided at suitable points in the transverse beam (14) and in the spring strut holders (12, 13) of the U-shaped cross-member (38) for the purpose of weight reduction.

9. A chassis according to one of the foregoing claims, **characterised in that**, in addition to its proper function, one of the two spring strut holders (12, 13) incorporates an additional function within the U-shaped cross-member (38), namely that of being a frame-mounted supporting, retaining, and coupling element for one end of the Panhard rod (15).

10. A chassis according to claim 9, **characterised in that**, in order to constitute the coupling element for the Panhard rod (15), one of the two spring strut holders (12, 13) is extended downwards by means of a bearing bracket (73) at whose lower end a jaw and, at either side of said jaw, bearing eyes (74, 75) are provided, to which bearing eyes (74, 75) the Panhard rod (15) is fastened by means of a claw-type joint (77) installed in a bearing eye (76) provided at one of its ends and by associated bolts (78).

11. A chassis according to one of claims 1, 9, or 10, **characterised in that** the other, opposite extremity of the Panhard rod (15) is coupled to a suitable point on the assembly consisting of the rigid axle beam and the longitudinal arms by means of a claw-type joint (80) installed in the bearing eye (79) located at said opposite extremity.

12. A chassis according to claim 11, **characterised in that** the Panhard rod (15) is connected, by means of the claw-type joint (80), to a bearing support (81) which is either an integral part of the axle beam (3) or of one of the two longitudinal arms (4, 5) or is mounted thereon, and on which an appropriate contact surface and threaded drill holes are provided in order to support the claw-type joint (80) and attach the same by means of bolts (82).

13. A chassis according to claim 1, **characterised in that** an articulation point (32, 33) is provided for the lower end (28, 29) of a spring strut (6, 9), said articulation point being arranged on each axle side of the rigid axle beam (3), and positioned as closely as possible to a wheel-bearing connecting head (34, 35) located on the outer extremity, so as to permit a maximum possible spring track and - when viewed from the front - so as to produce a convergent arrangement of the two spring struts (6, 9), in which the upper ends (36, 37) of the latter are less far apart than their lower ends (28, 29), and that each of the two spring struts (6, 9) - when seen from the side - is arranged so as to be either vertical or slightly inclined towards the front or rear.

14. A chassis according to claim 13, **characterised in that** the lower ends of each of the two spring struts (6, 9) are coupled by means of a claw-type joint (30, 31), incorporated into a bearing eye (28, 29) located at said lower end of the spring strut (6, 9), to an axle beam-anchored bearing point which is formed by a jaw-like bracket (32, 33), shaped as an integral part of or mounted on the rigid axle beam (3), and positioned as closely as possible to each of the wheel-bearing connecting heads (34, 35) located on the outer extremities of said axle beam.

15. A chassis according to claim 1, **characterised in that** each of the two longitudinal arms (4, 5) is designed in the form of a cast or forged part which, after being cast, is subsequently machined and finished at the necessary points and to whose base (23,24), if the connecting point for one end of the Panhard rod (15) is provided there, the jaw-like bearing support (81) is fastened or forms an integral part of said base of the longitudinal arm (4; 5), and, protruding laterally towards the inside, is positioned adjacent to said connecting point on the axle beam (3).

16. A chassis according to claim 1, **characterised in that**, on each of the two longitudinal arms (4, 5) or on the rigid axle beam (3), at each side of the axle a bracket for positioning and bracing a jack is either mounted thereon or forms an integral part of said longitudinal arm (4, 5) or said axle beam (3).

## Revendications

1. Châssis de véhicule utilitaire lourd à un cadre dont les deux longerons (1, 2) sont reliés par plusieurs traverses et à plusieurs essieux dont l'un au moins est un essieu rigide sur le corps (3) duquel s'étendent un berceau (38) ayant, vu de l'avant, la forme d'un U et reliant les deux longerons (1, 2) ainsi qu'une barre Panhard (15) servant au guidage transversal de l'essieu, **caractérisé en ce que**:
a) l'essieu rigide, qui peut être un essieu avant, poussé ou traîné, se présente à la manière d'un essieu à bras tirés autostabilisateur,
b) sur l'essieu à bras tirés, la fonction de stabilisation limitant le roulis du véhicule est assignée à un ensemble constitué du corps d'essieu rigide (3) et de deux bras longitudinaux (4, 5) disposés au niveau de ce dernier,
b1) les deux bras longitudinaux (4, 5), très écartés, étant bridés en bout, à l'avant ou à l'arrière, au corps (3) au moyen de vis (25), avec liaison par adhérence ainsi que, le cas échéant, par obstacle,
b2) le corps d'essieu (3) présentant une capacité de torsion définie dans une zone médiane droite (18) située entre les bras longitudinaux articulés (4, 5),
b3) les deux bras longitudinaux (4, 5) étant relativement rigides en flexion dans la direction verticale, mais à flexibilité limitée en torsion autour de leur axe longitudinal, leur rigidité en flexion ainsi que leur capacité de torsion étant adaptées, en liaison avec la capacité de torsion du corps d'essieu (3), à l'effet de stabilisation global visé par configuration et dimensionnement appropriés des sections déterminantes,
b4) l'ensemble corps d'essieu rigide/bras longitudinaux étant articulé par les extrémités libres des deux bras longitudinaux (4, 5) sur des supports (16, 17) solidaires du cadre,
c) la barre Panhard (15) prévue pour le guidage transversal est articulée, d'une part, sur l'ensemble corps d'essieu rigide /bras longitudinaux et, d'autre part, directement sur le cadre (1, 2),
d) une jambe McPherson (6, 9) constituée d'un ressort pneumatique ou hélicoïdal (7, 10) et d'un amortisseur (8, 11) qui lui est coaxial est prévue de chaque côté de l'essieu, chaque jambe McPherson (6, 9)
d1) étant articulée à son extrémité inférieure sur le corps d'essieu (3) et
d2) étant fixée à son extrémité supérieure à l'un des montants (12, 13),
e) les deux montants de jambe McPherson (12, 13) font partie intégrante du berceau en U (38) et en constituent les ailes, par l'intermédiaire desquelles il est relié de façon stabilisant le cadre aux deux longerons (1, 2).

2. Châssis suivant la revendication 1, **caractérisé en ce que** le berceau en U (38) se compose de trois parties, à savoir les deux montants de jambe McPherson (12, 13) et une traverse (14) qui recouvre en toit, avec un faible écart, le corps d'essieu (3) ainsi que la barre Panhard (15) et aux extrémités de laquelle sont raccordés les deux montants de jambe McPherson (12, 13).

3. Châssis suivant la revendication 2, **caractérisé en ce que** la traverse (14) du berceau en U (38) est constituée d'une pièce emboutie, moulée ou forgée à section en forme de chapeau, dont les zones extérieures gauche et droite se présentent à la manière d'une mâchoire dans laquelle s'insère par une zone de raccordement un montant de jambe McPherson (12, 13) et où ce dernier est fixé à la traverse (14) au moyen de plusieurs vis (53).

4. Châssis suivant l'une des revendications 2 et 3, **caractérisé en ce que** la traverse (14) du berceau en U (38) présente une partie médiane droite (39), avec laquelle elle recouvre avec un faible écart le corps d'essieu rigide (3) ainsi que la barre Panhard (15), et, de part et d'autre de la partie médiane (39), une partie terminale relevée en biais (40, 41), dont l'extrémité se présente à la manière d'une mâchoire.

5. Châssis suivant l'une des revendications 3 et 4, **caractérisé en ce que** chaque mâchoire prévue pour le raccordement d'un montant de jambe McPherson (12, 13) est constituée d'une découpe (42, 43) pratiquée à l'extrémité de la membrure supérieure de la traverse (14) et de joues (44, 45 ; 46, 47) laissées de part et d'autre de chaque découpe (42, 43), auxquelles sont associées, à l'avant et à l'arrière du montant de jambe McPherson considéré (12, 13), des portées (48, 49 ; 50, 51) au niveau desquelles s'appuie la traverse (14) par ses joues (44, 45 ; 46, 47) et où elle est fixée au montant de jambe McPherson considéré (12, 13) par des vis (53) passant dans des trous correspondants (52).

6. Châssis suivant l'une des revendications précédentes, **caractérisé en ce que** chaque montant de jambe McPherson (12, 13) se présente, au moins à sa partie supérieure, à la manière d'une demi-coque ouverte vers l'extérieur (54, 55), dont l'enveloppe (56, 57) recouvre partiellement la jambe McPherson associée (6, 9) au niveau de son ressort pneumatique ou hélicoïdal (7, 10), radialement vers l'extérieur et à faible distance de l'intérieur, et sur la chapelle (58, 59) de laquelle s'appuie à son extrémité supérieure la jambe McPherson associée (6, 9) et à laquelle elle est fixée au moyen de boulons (62, 63) passant par deux trous (60, 61), un trou central (64, 65) pratiqué dans la chapelle (58, 59) servant à centrer la jambe McPherson considérée (12, 13) et à laisser passer son extrémité supérieure (36, 37).

7. Châssis suivant la revendication 6, **caractérisé en ce que** chaque montant de jambe McPherson (12, 13) présente, à peu près au milieu de sa hauteur, une bride de raccordement (66, 67) en saillie vers l'extérieur de la demi-coque (54, 55) et pourvue de plusieurs trous de vis (68, 69), que cette bride de raccordement (66, 67) se situe approximativement au centre de poussée et que chaque montant de jambe McPherson (12, 13) est fixé au longeron considéré (1, 2) par sa bride de raccordement (66, 67), par l'intermédiaire de vis (70) traversant les trous de vis (68, 69) et des trous alignés en conséquence à l'intérieur du longeron ainsi que d'écrous associés.

8. Châssis suivant l'une des revendications 2 à 7, **caractérisé en ce que** des trous ou ajours servant à réduire le poids sont prévus en des points appropriés dans la traverse (14) et les montants de jambe McPherson (12, 13) du berceau en U (38).

9. Châssis suivant l'une des revendications précédentes, **caractérisé en ce qu'**au sein du berceau en U (38), l'un des deux montants de jambe McPherson (12, 13) se voit assigner, en plus de sa fonction proprement dite, celle de constituer l'organe solidaire du cadre servant d'appui, de retenue et d'articulation de l'une des extrémités de la barre Panhard (15).

10. Châssis suivant la revendication 9, **caractérisé en ce que**, pour constituer l'organe d'articulation de la barre Panhard (15), l'un des deux montants de jambe McPherson (12, 13) est prolongé vers le bas par un flasque (73), à l'extrémité inférieure duquel sont ménagés une mâchoire et, de part et d'autre de cette derrière, un coussinet (74, 75), auxquels est fixée la barre Panhard (15) par une articulation à griffes (77) montée dans un coussinet (76) prévu à une extrémité ainsi que par des vis associées (78).

11. Châssis suivant l'une des revendications 1, 9 et 10, **caractérisé en ce que** la barre Panhard (15) est raccordée à son autre extrémité opposée, par l'intermédiaire d'une articulation à griffes (80) montée dans le coussinet (79) prévu à ce niveau, en un point approprié de l'ensemble corps d'essieu rigide /bras longitudinaux.

12. Châssis suivant la revendication 11, **caractérisé en ce que** la barre Panhard (15) est raccordée par l'intermédiaire de l'articulation à griffes (80) à un support (81) qui est soit venu de fonderie soit rapporté soit sur le corps d'essieu (3) soit sur l'un des deux bras longitudinaux (4, 5) et sur lequel sont prévus une portée et des trous taraudés adéquats pour l'appui de l'articulation à griffes (80) et sa fixation au moyen de vis (82).

13. Châssis suivant la revendication 1, **caractérisé en ce que** de chaque côté de l'essieu, est disposé sur le corps d'essieu rigide (3) un point d'articulation (32, 33) destiné à l'extrémité inférieure (28, 29) d'une jambe McPherson (6, 9) et déporté le plus possible vers la tête de raccordement d'un support de roue (34, 35) de manière à obtenir une voie de suspension maximale et - vu de l'avant - une disposition en flèche des deux jambes McPherson (6, 9), dans laquelle les extrémités supérieures (36, 37) desdites jambes sont moins écartées que leurs extrémités inférieures (28, 29), et que chacune des deux jambes McPherson (6, 9) - vu de côté - est soit verticale soit légèrement inclinée vers l'avant ou vers l'arrière.

14. Châssis suivant la revendication 13, **caractérisé en ce que** chacune des deux jambes McPherson (6, 9) est articulée à son extrémité inférieure, par l'intermédiaire d'une articulation à griffes (30, 31) montée dans un coussinet (28, 29) prévu à ce niveau, sur un palier solidaire du corps d'essieu rigide (3), constitué d'un support de type mâchoire (32, 33) rapporté ou venu de fonderie sur le corps d'essieu (3) et déporté le plus possible vers la tête de raccordement d'un support de roue (34, 35), en bout du corps d'essieu (3).

15. Châssis suivant la revendication 1, **caractérisé en ce que** les deux bras longitudinaux (4, 5) sont réalisés chacun sous forme de pièce forgée ou moulée, reprise et finie par usinage aux points nécessaires et sur laquelle, lorsqu'il y est prévu le point de raccordement de l'une des extrémités de la barre Panhard (15), est fixé ou intégré de fonderie le support de type mâchoire (81), à proximité du point de raccordement sur le corps d'essieu (3), avec saillie latérale vers l'intérieur au niveau du pied (23, 24) du bras longitudinal (4, 5).

16. Châssis suivant la revendication 1, **caractérisé en ce que** sur chacun des deux bras longitudinaux (4, 5) ou sur le corps d'essieu rigide (3), de chaque côté de l'essieu, est soit rapporté soit venu de fonderie un support de positionnement et de soutien de cric.
